# EUROPÄISCHE PATENTANMELDUNG

(11) **EP 4 336 462 A1**
(43) Veröffentlichungstag der Anmeldung: **13.03.2024**
(21) Anmeldenummer: 23166756.9
(22) Anmeldetag: 05.04.2023
(51) Int. Cl.: G06V 10/82, G06V 40/16, G07C 9/25

(54) **VERFAHREN ZUR PRÄZISEN GESICHTSERKENNUNG UND DETEKTION VON GESICHTSBILDMANIPULATIONEN**

(30) Priorität: 09.09.2022 DE 102022123056
(71) Anmelder: Secunet Security Networks Aktiengesellschaft, 45138 Essen (DE)
(72) Erfinder: Merkle, Johannes, 65719 Hofheim (DE); Norbert Andreas, Richartz, 46147 Oberhausen (DE)
(74) Vertreter: Andrejewski - Honke Patent- und Rechtsanwälte Partnerschaft mbB

(57) **Zusammenfassung**

Bei einem Verfahren zur Authentifizierung einer Person anhand von Gesichtsbildern und/oder zur Manipulationsdetektion bei Gesichtsbildern wird ein Ausweisgesichtsbild (2) eines Ausweises (3) einer zu identifizierenden Person (4) herangezogen. Ein Rechnersystem (7) nimmt eine Beurteilung vor, ob bzw. inwieweit das Ausweisgesichtsbild (2) und ein Vergleichsgesichtsbild (5) übereinstimmen. Das Rechnersystem (7) umfasst einen Vergleichsalgorithmus (8), wobei der Vergleichsalgorithmus (8) einen Abgleich des Ausweisgesichtsbildes (2) und des Vergleichsgesichtsbildes (5) durchführt. Der Abgleich stellt die Grundlage der Beurteilung dar, wobei die Beurteilung in einem Ähnlichkeitsmaß (13) abgebildet wird. Neben dem Ausweisgesichtsbild (2) werden weitere Ausweisdaten (9) des Ausweises (3) herangezogen, wobei die weiteren Ausweisdaten (9) vom Rechnersystem (7) genutzt werden und einen Wert des Ähnlichkeitsmaßes (13) beeinflussen können. Die weiteren Ausweisdaten (9) umfassen ein Datum und werden aus einem integrierten Schaltkreis des Ausweises (3) elektronisch, insbesondere mithilfe von Funk ausgelesen.

## Beschreibung

Die Erfindung betrifft ein Verfahren zur Authentifizierung einer Person anhand von Gesichtsbildern und/oder zur Manipulationsdetektion bei Gesichtsbildern, wobei ein Ausweisgesichtsbild eines Ausweises einer zu identifizierenden Person herangezogen wird, wobei ein Vergleichsgesichtsbild der Person heran gezogen wird, wobei ein Rechnersystem eine Beurteilung vornimmt, ob bzw. inwieweit das Ausweisgesichtsbild und das Vergleichsgesichtsbild übereinstimmen, wobei das Rechnersystem einen Vergleichsalgorithmus umfasst, wobei der Vergleichsalgorithmus einen Abgleich des Ausweisgesichtsbildes und des Vergleichsgesichtsbildes durchführt und der Abgleich die Grundlage der Beurteilung darstellt, wobei die Beurteilung in einem Ähnlichkeitsmaß abgebildet wird. Die Erfindung betrifft außerdem eine Vorrichtung zur Durchführung des Verfahrens sowie eine Verwendung der Vorrichtung.

Ein derartiges Verfahren ist aus WO 2018/234384 A1 bekannt, wonach ein Lesegerät ein Ausweisgesichtsbild aus einem elektronischen Ausweis einer zu identifizierenden Person ausliest. Ein Scanner nimmt ein Vergleichsgesichtsbild der zu identifizierenden Person auf, welches von einem Rechner mit dem Ausweisgesichtsbild abgeglichen wird. Der Rechner beurteilt schließlich, ob das Vergleichsgesichtsbild mit dem Ausweisgesichtsbild übereinstimmt.

Die in WO 2018/234384 A1 beschriebene Aufgabe stellt vor allem darauf ab, Gesichtsbildmanipulationen, insbesondere *Facial Morphing Attacks,* mithilfe einer Manipulationsdetektion bzw. einer *Morphing Attack Detection* (MAD) abzuwehren. Bei Morphingattacken wird das Gesichtsbild einer berechtigten Person mit einem Gesichtsbild einer zweiten Person gemischt bzw. gemorpht, so dass das resultierende, gemorphte Gesichtsbild die Merkmale beider Personen enthält. Sowohl die menschliche als auch die herkömmliche artifizielle Gesichtserkennung erkennen dann sowohl die berechtigte Person als auch die zweite Person in dem gemorphten Gesichtsbild.

Wird dieses gemorphte Gesichtsbild bei einem Amt zur Ausstellung von Ausweisen vorgelegt, erkennt der zuständige Mitarbeiter die vor ihm sitzende, berechtigte Person in dem gemorphten Gesichtsbild wieder. Die berechtigte Person mag zum Beispiel zur Verlängerung des Reisepasses berechtigt sein und beantragt die Verlängerung mit einem aktualisierten, aber gemorphten Gesichtsbild. Nach der Ausstellung des verlängerten Reisepasses mit dem gemorphten Gesichtsbild kann die zweite Person den Reisepass nutzen und wird mit großer Wahrscheinlichkeit die menschliche und artifizielle Gesichtserkennung, beispielsweise an Flughäfen, überlisten und ungehindert reisen können. Somit sind dem Reisepass unerkannterweise zwei Personen zugeordnet, welche aber von den Gesichtserkennungen jeweils eindeutig dem Reisepass zugerechnet werden.

Wünschenswert ist es daher, dass die Gesichtserkennung so ausgebildet ist, dass lediglich eine Person dem Identifikationsdokument zugeordnet werden kann und die Gesichtserkennung damit eine eineindeutige Zuordnung leistet. Hierzu wird in WO 2018/234384 A1 vorgeschlagen, einen Satz von Winkeln verschiedener charakteristischer Punkte des Ausweisgesichtsbildes mit einem entsprechenden Winkelsatz des Vergleichsgesichtsbildes miteinander abzugleichen. Dieses Winkelverfahren erhöht die Wahrscheinlichkeit der Enttarnung des gemorphten Bildes und verringert damit die Betrugsmöglichkeiten durch *Facial Morphing Attacks.*

Allerdings ist es grundsätzlich möglich, derart gemorphte Gesichtsbilder zu erzeugen, bei denen die Unterschiede in den Winkeln der einzelnen charakteristischen Punkte geringer ausfallen, so dass das Winkelverfahren an seine Grenzen stößt. Der Erfindung liegt daher die Aufgabe zugrunde, die Gesichtserkennung so zu verbessern, dass Gesichstbildmanipulationen - insbesondere Morphingattacken - noch treffsicherer aufgedeckt werden.

Diese Aufgabe wird gelöst durch ein Verfahren zur Authentifizierung einer Person anhand von Gesichtsbildern und/oder zur Manipulationsdetektion bei Gesichtsbildern, wobei ein Ausweisgesichtsbild eines Ausweises einer zu identifizierenden Person herangezogen wird, wobei ein Vergleichsgesichtsbild der Person heran gezogen wird, wobei ein Rechnersystem eine Beurteilung vornimmt, ob bzw. inwieweit das Ausweisgesichtsbild und das Vergleichsgesichtsbild übereinstimmen, wobei das Rechnersystem einen Vergleichsalgorithmus umfasst, wobei der Vergleichsalgorithmus einen Abgleich des Ausweisgesichtsbildes und des Vergleichsgesichtsbildes durchführt und der Abgleich die Grundlage der Beurteilung darstellt, wobei die Beurteilung in einem Ähnlichkeitsmaß abgebildet wird, wobei neben dem Ausweisgesichtsbild weitere Ausweisdaten des Ausweises herangezogen werden, wobei die weiteren Ausweisdaten vom Rechnersystem genutzt werden und einen Wert des Ähnlichkeitsmaßes beeinflussen können, wobei die weiteren Ausweisdaten von einem Lesegerät ausgelesen werden, wobei das Lesegerät die weiteren Ausweisdaten elektronisch ausliest, insbesondere mithilfe von Funk ausliest, wobei die weiteren Ausweisdaten ein Datum umfassen und aus einem integrierten Schaltkreis des Ausweises ausgelesen werden.

Besonders vorzugsweise wird das Ausweisgesichtsbild von einem Lesegerät aus dem Ausweis herangezogen bzw. maschinell ausgelesen. Gemäß einer Ausführungsform wird das Ausweisgesichtsbild herangezogen, indem es aus einer Dateimenge geladen wird. Der Begriff "Dateimenge" meint vorzugsweise Datenbanken, bevorzugt aber auch nicht mit Datenbankmanagementsystemen verwaltete Daten.

Der Erfindung liegt die Erkenntnis zugrunde, dass das Alter des Ausweisgesichtsbildes von besonderer Bedeutung ist, wodurch die Alterung der Person in dem Vergleichsalgorithmus berücksichtigt werden kann. Das Alter des Ausweisgesichtsbildes bzw. die Alterung der Person kann insbesondere durch ein toleranteres Ähnlichkeitsmaß und/oder durch eine Simulation der Gesichtsalterung in den Vergleichsalgorithmus einfließen. Ist das Alter des Ausweisgesichtsbildes recht hoch, so ist von einer größeren Änderungswahrscheinlichkeit des Gesichts auszugehen, so dass der Vergleichsalgorithmus bzw. die Gesichtserkennung bei dem Abgleich mit dem Vergleichsgesichtsbild entsprechend toleranter urteilen muss. Unter anderem ein Ausweisdatum (Ausstellungsdatum oder Ablaufdatum) ermöglicht Rückschlüsse auf das Alter des Ausweisgesichtsbildes. Ergänzend ist die Kenntnis des Geschlechts der zu identifizierenden Person und/oder das ausstellende Land des Ausweises von größerer Bedeutung, weil dies impliziert, welche Gesichtspartien tendenziell einer größeren Änderungswahrscheinlichkeit unterworfen sind. Schließlich liefert das Geburtsdatum Aufschlüsse über die altersabhängige Alterungsgeschwindigkeit. Alle diese Informationen der weiteren Ausweisdaten lassen den Vergleichsalgorithmus bzw. die Gesichtserkennung treffsicherer werden. Vor allem Gesichtsbildmanipulationen sowie insbesondere *Facial Morphing Attacks* können besser aufgedeckt werden, wodurch die eingangsgenannte Aufgabe gelöst wird.

Der Begriff "Gesichtsbild" meint vorzugsweise ein Frontalporträt und weiter vorzugsweise ein Frontalporträt in Form eines biometrischen Passbildes. Der Begriff "Ausweis" umfasst insbesondere amtliche Identitätsnachweise bzw. Identifikationsdokumente wie Personalausweise und Reisepässe. Der Ausdruck "Ausweis" umfasst bevorzugt Berechtigungsnachweise wie die elektronische Gesundheitskarte oder den Führerschein. Bevorzugt meint das Wort "Ausweis" auch Firmen-, Kunden-, Dienst- und Mitgliedsausweise. Mit Vorteil weist der Ausweis wenigstens ein Ausweisgesichtsbild sowie weitere Ausweisdaten auf. Die weiteren Ausweisdaten umfassen typischerweise ausweisbezogene Ausweisdaten und/oder personenbezogene Ausweisdaten. Zur Gruppe der personenbezogenen Ausweisdaten gehören insbesondere der Name, das Geschlecht, die Körpergröße, die Haar- und die Augenfarbe und - vor allem - das Geburtsdatum. Zu den ausweisbezogenen Ausweisdaten sind insbesondere die ausstellende Organisation bzw. das ausstellende Land, das Ausstellungsdatum, das Ablaufdatum, die Ausweisart und dergleichen mehr zu zählen.

Der Ausdruck "Manipulation" bzw. (Gesichts-) Bildmanipulation" meint bevorzugt betrügerische wie auch nicht-betrügerische Manipulationen. Ein Beispiel für betrügerische Manipulationen sind die bereits erwähnten Morphingattacken. Ein Beispiel für nicht-betrügerische Manipulationen sind die immer häufiger vorkommenden *beautifications,* bei denen das für den Ausweis vorgesehene Ausweisgesichtsbild mit entsprechenden Programmen in ästhetischer Hinsicht bearbeitet wird. Besonders vorzugsweise wird das Verfahren zur Detektion von gemorphten Gesichtsbildern bzw. Morphingattacken verwendet. Der Begriff "morphen" meint vorzugsweise die Verwendung eines weiteren Gesichtsbildes, um ein Ausgangsgesichtsbild so zu verändern, dass ein neues - ein gemorphtes - Gesichtsbild entsteht.

Das Verfahren zur Authentifizierung einer Person anhand von Gesichtsbildern und/oder zur Manipulationsdetektion bei Gesichtsbildern kann in verschiedenen Anwendungen zum Einsatz kommen. Eine erste Anwendung mag beispielsweise die vollautomatische Durchgangskontrolle bzw. Ausweiskontrolle sein, welche typischerweise in Flughäfen, aber auch in Seehäfen und Landgrenzen zum Einsatz kommt. Hierbei tritt eine zu identifizierende Person zunächst an ein Lesegerät heran und lässt den Ausweis vom Lesegerät auslesen. Dabei liest das Lesegerät insbesondere das Ausweisgesichtsbild sowie die weiteren Ausweisdaten aus. Davor oder danach erfasst eine Kamera ein aktuelles Vergleichsgesichtsbild der zu identifizierenden Person. Sofern die beiden Gesichtsbilder übereinstimmen bzw. keine Manipulationen detektiert wurde, öffnet sich beispielsweise eine Tür automatisch und lässt die zu identifizierende Person passieren.

Eine weitere Anwendung kann die teilautomatische Ausweiskontrolle sein. Auch die teilautomatische Ausweiskontrolle kann insbesondere an Flughäfen stattfinden, wobei sich ein Lesegerät in einem Identifikationsschalter in Form eines Grenzkontrollschalters befinden mag. Eine zu identifizierende Person tritt an den Grenzkontrollschalter heran und überreicht der kontrollierenden Personen den Ausweis. Die kontrollierende Person kann dann den Ausweis von einem Lesegerät auslesen lassen, während eine Kamera ein Vergleichsgesichtsbild der zu identifizierenden Person erfasst. Sofern die beiden Gesichtsbilder übereinstimmen bzw. keine Manipulation erkannt wurde und auch die kontrollierende Person keine Auffälligkeiten feststellt, darf die zu identifizierende Person auf Geheiß der kontrollierenden Person den Grenzkontrollschalter passieren.

Eine dritte Anwendung ist für die Beantragung eines zu aktualisierenden Ausweises von Vorteil. Hierbei legt die zu identifizierende Person bzw. der Antragsteller der zuständigen Behörde ein physisches oder digitales Vergleichsgesichtsbild vor, welches für den aktualisierten Ausweis verwendet werden soll. Dieses Vergleichsgesichtsbild wird dann mit dem Ausweisgesichtsbild des bisherigen Ausweises bzw. eines früheren Ausweises verglichen. Das Ausweisgesichtsbild kann mit einem Lesegerät aus dem Ausweis ausgelesen oder aber aus einer Dateimenge geladen werden. Stimmen diese beiden Gesichtsbilder überein bzw. wurde eine Manipulation nicht detektiert, so wird das Vergleichsgesichtsbild für den aktualisierten Ausweis zugelassen. Diese Anwendung unterscheidet sich daher von den beiden vorgenannten Anwendungen darin, dass eine mit dem Rechnersystem verbundene Kamera nicht benötigt wird. Auch ist ein Lesegerät nicht zwingend erforderlich.

Ein vierter Anwendungsfall kommt insbesondere bei Online-Authentifizierungsverfahren in Betracht. Hierzu kann beispielsweise vorgesehen sein, dass die zu identifizierende Person einen sicherheitskritischen Dienst eines Unternehmens, beispielsweise ein Online-Bankkonto, nutzen möchte. Zur Registrierung für dieses Konto kann sich auf dem Smartphone der zu identifizierenden Person eine App der Online-Bank befinden, mit deren Hilfe beispielsweise der Personalausweis optisch oder elektronisch, insbesondere mithilfe von Funk ausgelesen wird. Gleichzeitig kann die zu identifizierende Person per Videokonferenz über dieselbe App mit einer kontrollierenden Person der Online-Bank verbunden sein. So kann die kontrollierende Person der zu identifizierenden Person die Anweisung geben, dass die zu identifizierende Person ein Frontalporträt von sich mit dem Smartphone erstellt. Das Frontalporträt wird dann von der App als Vergleichsgesichtsbild herangezogen und mit dem per App ausgelesenen Ausweisgesichtsbild verglichen. Neben diesen beispielhaften Anwendungsfällen sind zahlreiche weitere Anwendungen möglich.

Das Rechnersystem kann lediglich einen Rechner bzw. lediglich eine Recheneinheit umfassen. Es ist möglich, dass das Rechnersystem eine Mehrzahl an Rechnern bzw. Recheneinheiten aufweist. Die Rechner bzw. Recheneinheiten des Rechnersystems können in räumlicher Nähe zur Kamera bzw. zum Lesegerät angeordnet sein. Es ist möglich, dass das Rechnersystem bzw. Teile des Rechnersystems weit entfernt von der Kamera bzw. von dem Lesegerät befindlich sind. Ein Teil des Vergleichsalgorithmus kann auf einem ersten Rechner befindlich sein, während ein anderer Teil des Vergleichsalgorithmus auf einem anderen Rechner zu finden sein kann. Gemäß einer bevorzugten Ausgestaltung umfasst das Rechnersystem wenigstens einen Server. Mit Vorteil ist der Server des Rechnersystems einer Mehrzahl an Vorrichtungen zur Authentifizierung einer Person anhand von Gesichtsbildern zugeordnet.

Mit Vorteil wird das Vergleichsgesichtsbild mit einer Kamera erfasst, wobei die Kamera vorzugsweise mit dem Rechnersystem zur Übermittlung von Bilddaten des Vergleichsgesichtsbildes verbunden ist. Die Kamera kann in räumlicher Nähe zu dem Lesegerät angeordnet sein. Insbesondere ist es möglich, dass die Kamera und das Lesegerät Bestandteile einer vollautomatischen Passkontrolle bzw. einer Durchgangskontrolle bzw. einer weiter unten noch beschriebenen Vorrichtung zur Authentifizierung einer Person anhand von Gesichtsbildern und/oder zur Manipulationsdetektion bei Gesichtsbildern sind. Die Kamera kann räumlich weit entfernt von dem Lesegerät befindlich sein. Ebenso ist es möglich, dass das Auslesen des Ausweises an einen ersten Tag und die Aufnahme des Vergleichsgesichtsbildes mit der Kamera an einem anderen Tag stattfindet. Vorzugsweise finden das Auslesen des Ausweises mit dem Lesegerät sowie das Aufnehmen des Vergleichsgesichtsbildes mit der Kamera am gleichen Tag und vorzugsweise innerhalb von sechs Stunden bzw. drei Stunden bzw. einer Stunde statt.

Gemäß einer ganz besonders bevorzugten Ausführungsform umfasst das Rechnersystem einen Schätzalgorithmus, wobei der Schätzalgorithmus aus den weiteren Ausweisdaten einen Schätzwert des Alters des Ausweisgesichtsbildes ermittelt und den Schätzwert dem Vergleichsalgorithmus zur Verfügung stellt. Es ist besonders von Vorteil, dass das Lesegerät dem Schätzalgorithmus personenbezogene Ausweisdaten und/oder ausweisbezogene Ausweisdaten zur Verfügung stellt. Es ist ganz besonders bevorzugt, dass das Lesegerät dem Schätzalgorithmus das Geburtsdatum der zu identifizierenden Person, ein Ausstellungsdatum des Ausweises, ein Ablaufdatum des Ausweises, die Art des Ausweises und/oder das ausstellende Land des Ausweises übermittelt. Das Ausweisdatum kann insbesondere in gedruckter Form vorliegen und optisch ausgelesen werden.

Es ist sehr vorteilhaft, wenn das Lesegerät das Ausweisgesichtsbild elektronisch, insbesondere mithilfe von Funk und/oder optisch und/oder per elektronischem Kontakt auslesen kann. Mit Vorteil liest das Lesegerät das Ausweisgesichtsbild mithilfe von Funk, insbesondere durch RFID-Technologie, aus. Im Falle eines optischen Auslesens umfasst das Lesegerät zweckmäßigerweise eine Objekt- und/oder Texterkennung bzw. ist mit einer Objekt- und/oder einer Texterkennung verbunden. Hier bietet sich beispielsweise eine optische Zeichenerkennung (OCR, Optical Character Recognition) an. Im Falle eines Auslesens mithilfe von Funk kann der Ausweis einen Chip umfassen, welcher beispielsweise als RFID-Chip ausgebildet ist und von einem RFID-Lesegerät ausgelesen werden kann. Mit Vorteil umfasst das Lesegerät eine optische Leseeinheit und eine Funk-Leseeinheit, um bevorzugt möglichst viele Informationen aus einer großen Vielzahl an unterschiedlichen Ausweisen auslesen zu können. Der Ausdruck "Lesegerät" kann eine einzige Baueinheit meinen, wobei allerdings auch zwei oder mehr Lesegeräte unter diesem Begriff verstanden werden können. Beispielsweise kann der Ausdruck "Lesegerät" ein optisches Lesegerät sowie ein davon baulich getrenntes elektronisches Lesegerät umfassen. Es ist möglich, dass beide Lesegeräte denselben Ausweis auslesen, um möglichst viele Informationen zu erhalten.

Es ist sehr bevorzugt, dass die ausgelesenen weiteren Ausweisdaten ausweisbezogene Ausweisdaten und/oder personenbezogene Ausweisdaten umfassen. Die ausgelesenen, ausweisbezogenen Ausweisdaten können wenigstens ein Ausweisdatum, die Art des Ausweises und/oder das ausstellende Land des Ausweises umfassen. Mit dem Begriff "Ausweisdatum" ist sowohl ein Ausstellungsdatum als auch ein Ablaufdatum des Ausweises gemeint. Die ausgelesenen personenbezogenen Ausweisdaten weisen mit Vorteil das Geburtsdatum der Person und/oder das Geschlecht der Person und/oder den Namen der Person auf.

Der Begriff "Funk" meint vorzugsweise modulierte, elektromagnetische Wellen, welche vorzugsweise im Radiofrequenzbereich befindlich sind. Vorzugsweise handelt es sich bei dem Funk um RFID-Funk. Der Ausdruck "integrierter Schaltkreis" meint bevorzugt eine auf einem Halbleitermaterial aufgebrachte elektronische Schaltung. Der integrierte Schaltkreis entspricht vorzugsweise dem Standard der internationalen Zivilluftfahrtorganisation (ICAO, International Civil Aviation Organization) mit der Bezeichnung "Doc 9303 Machine readable travel documents". Vorzugsweise entspricht der integrierte Schaltkreis dem ICAO-Standard 9303 der Ausgabe 8 von 2021 oder jünger. Besonders vorzugsweise entspricht der integrierte Schaltkreis Teil 10 des ICAO-Standards 9303 der Ausgabe 8 oder jünger.

Es ist bevorzugt, dass der integrierte Schaltkreis eine Dateistruktur, insbesondere eine Dateistruktur gemäß Appendix E von Teil 10 des ICAO-Standards 9303 der Ausgabe 8 oder jünger, aufweist. Vorzugsweise umfasst die Dateistruktur des integrierten Schaltkreises wenigstens die Ordner EF.CardSecurity und/oder eMRTD Application. Mit Vorteil weist der Ordner eMRTD Application wenigstens einen der Ordner EF.DG1 bis EF.DG16 sowie EF.SOD auf.

Es ist sehr bevorzugt, dass die Ausweisdaten ein Signaturdatum, ein Erzeugungsdatum biometrischer Daten, ein Ausstellungsdatum, ein Personalisierungsdatum und/oder ein Aufnahmedatum von Notfalldaten aufweisen. Der Begriff "Datum" meint vorzugsweise ein Tagesdatum bzw. einen Zeitstempel einschließlich eines Tagesdatums. Der Zeitstempel kann beispielsweise die Coordinated Universal Time (UTC) sein und neben dem Datum auch noch Stunden, Minuten und Sekunden umfassen.

Das Signaturdatum entstammt vorzugsweise dem Ordner EF.CardSecurity und/oder dem Order EF.SOD und weiter vorzugsweise dem jeweils darin befindlichen Ordner "Signed Attrs" (signierte Attribute). Das Signaturdatum ist besonders vorzugsweise dem Attribut "Signing Time" des Ordners der signierten Attribute entnommen. Das Erzeugungsdatum biometrischer Daten ist vorzugsweise den Ordnern EF.DG2, EF.DG3 und/oder EF.DG4 entnommen. Das Ausstellungsdatum entstammt vorzugsweise dem Ordner EF.DG12. Das Personalisierungsdatum wird vorzugsweise aus dem Ordner EF.DG12 ausgelesen. Das Aufnahmedatum von Notfalldaten wird mit Vorteil aus dem Ordner EF.DG 16 ausgelesen.

Besonders vorzugsweise ist das mithilfe von Funk vom Lesegerät aus der Dateistruktur des integrierten Schaltkreises ausgelesene Datum das Signaturdatum des Attributs "Signing Time" aus den signierten Attributen des Ordners EF.CardSecurity oder EF.SOD.

Besonders vorzugsweise umfassen die ausgelesenen, weiteren Ausweisdaten personenbezogene Ausweisdaten, wobei bevorzugt ist, dass die ausgelesenen personenbezogenen Ausweisdaten dem Vergleichsalgorithmus übergeben werden. Gemäß einer besonders bevorzugten Ausführungsform ermittelt das Rechnersystem bzw. der Vergleichsalgorithmus aus dem Ausweisgesichtsbild, dem Vergleichsgesichtsbild und/oder den weiteren Ausweisdaten das Geschlecht der Person und/oder das Geburtsdatum der Person und/oder den Namen der Person. Beispielsweise kann der Vorname aus den personenbezogenen Ausweisdaten dazu benutzt werden, um daraus das Geschlecht der zu identifizierenden Person abzuleiten. Mit Vorteil ermittelt das Rechnersystem bzw. der Vergleichsalgorithmus - insbesondere aus den weiteren Ausweisdaten - das Geburtsdatum der Person, um die altersabhängige Alterungsgeschwindigkeit bei dem Abgleich der Gesichtsbilder zu berücksichtigen. Es ist bevorzugt, dass das Rechnersystem bzw. der Vergleichsalgorithmus das Geschlecht der Person für den Abgleich der beiden Gesichtsbilder heranzieht, um geschlechtsbedingte Änderungswahrscheinlichkeiten bei den unterschiedlichen Gesichtspartien zu berücksichtigen. Vorzugsweise zieht das Rechnersystem bzw. der Vergleichsalgorithmus das ausstellende Land aus den ausweisbezogenen Ausweisdaten heran, um ethnisch bedingte Änderungswahrscheinlichkeiten zu berücksichtigen. Dies mag beispielsweise den Bartwuchs betreffen.

Besonders vorzugsweise umfasst das Rechnersystem ein Länderregister bzw. ist das Rechnersystem mit einem Länderregister verbunden. Es ist bevorzugt, dass das Rechnersystem bzw. der Schätzalgorithmus auf das Länderregister zugreift, wenn das Ausstellungsdatum sich nicht in den ausgelesenen, weiteren Ausweisdaten befindet. Das Länderregister umfasst vorteilhafterweise länderspezifische Daten, wobei die länderspezifischen Daten vorzugsweise wenigstens eine länderspezifische allgemeine Gültigkeitsdauer von Ausweisen und/oder wenigstens einen länderspezifischen Altersschwellwert, der eine allgemeine Gültigkeitsdauer definiert, umfassen. Es ist ganz besonders bevorzugt, dass das Rechnersystem bzw. der Schätzalgorithmus aus einem ausgelesenen ausstellenden Land, einem ausgelesenen Ablaufdatum des Ausweises und einer betreffenden länderspezifischen allgemeinen Gültigkeitsdauern ein Ausstellungsdatum des Ausweises bzw. das Alter des Ausweisgesichtsbildes abschätzen kann. Bevorzugt zieht der Schätzalgorithmus die betreffende, länderspezifische, allgemeine Gültigkeitsdauer von dem Ablaufdatum ab, um das Ausstellungsdatum zu ermitteln. Für die Ermittlung der betreffenden, länderspezifischen allgemeinen Gültigkeitsdauer mag der Schätzalgorithmus ein ausgelesenes Geburtsdatum der zu identifizierenden Person sowie einen oder mehrere etwaige Altersschwellwerte heranziehen.

Gemäß einer besonders bevorzugten Ausführungsform weist das Rechnersystem bzw. der Vergleichsalgorithmus einen maschinellen Lernalgorithmus, vorzugsweise ein neuronales Netz und besonders vorzugsweise ein konvolutionales neuronales Netz auf. Der maschinelle Lernalgorithmus ist bzw. wird vorzugsweise darauf trainiert, als Eingabe die beiden Gesichtsbilder zu erhalten, um daraus das Ähnlichkeitsmaß zu ermitteln. Es ist möglich, dass der Vergleichsalgorithmus einen weiteren Algorithmus umfasst und zweckmäßig, dass der weitere Algorithmus mithilfe der personenbezogenen Ausweisdaten und/oder der ausweisbezogenen Ausweisdaten ein angepasstes Ähnlichkeitsmaß ermittelt. Vorzugsweise umfasst der Vergleichsalgorithmus zwei maschinelle Lernalgorithmen. Es ist von Vorteil, dass ein erster maschineller Lernalgorithmus zu jedem der beiden Gesichtsbilder einen Merkmalsvektor, insbesondere einen numerischen Vektor oder einen Bitstring, ausgibt. Es ist möglich, dass ein zweiter maschineller Lernalgorithmus darauf trainiert wird, aus den Merkmalsvektoren der beiden Gesichtsbilder das Ähnlichkeitsmaß zu bestimmen. Gemäß einer Ausführungsform übernimmt ein weiterer Algorithmus das Ähnlichkeitsmaß des zweiten maschinellen Lernalgorithmus und zieht zusätzlich personenbezogene Ausweisdaten und/oder ausweisbezogene Ausweisdaten heran, um ein angepasstes Ähnlichkeitsmaß zu bestimmen. Es ist hilfreich, dass der zweite maschinelle Lernalgorithmus aus dem Ähnlichkeitsmaß des ersten Lernalgorithmus mithilfe der personenbezogenen Ausweisdaten und/oder der ausweisbezogenen Ausweisdaten ein angepasstes Ähnlichkeitsmaß zu bestimmt.

Das Ähnlichkeitsmaß ist vorzugsweise ein eindimensionaler Score, wobei der eindimensionale Score besonders beispielsweise eine Skala von 0 bis 1 besitzt. Gemäß einer bevorzugten Ausführungsform bildet das Rechnersystem bzw. der Vergleichsalgorithmus mehrere Ähnlichkeitsmerkmale in dem Ähnlichkeitsmaß ab. Ein Ähnlichkeitsmerkmal mag beispielsweise die Augen betreffen, während ein weiteres Ähnlichkeitsmerkmale sich auf die Mundpartie bezieht. Es ist von Vorteil, dass das Ähnlichkeitsmaß bzw. der Score wenigstens einen Schwellwert umfasst, wobei der wenigstens eine Schwellwert einen Bereich "Personenidentität/keine Manipulation" des Ähnlichkeitsmaßes von einem Bereich "keine Personenidentität/Manipulation" trennt. Es ist möglich, dass das Ähnlichkeitsmaß einen zweiten Schwellwert umfasst, wobei der zweite Schwellwert gemeinsam mit dem ersten Schwellwert einen Zwischenbereich definiert, wobei der Zwischenbereich zwischen dem Bereich "Personenidentität/keine Manipulation" und "keine Personenidentität/Manipulation" liegt.

Vorzugsweise ermittelt der Vergleichsalgorithmus über das Ähnlichkeitsmaß bzw. den Score die Wahrscheinlichkeit, mit der das Ausweisgesichtsbild der Manipulation unterworfen wurde. Es ist möglich, dass der Vergleichs-algorithmus über das Ähnlichkeitsmaß bzw. den Score die Wahrscheinlichkeit ermittelt, mit der das Vergleichsbild der Manipulation unterworfen wurde. Die Überprüfung des Vergleichsbildes bezieht sich insbesondere auf den dritten Anwendungsfall.

Mit Vorteil sind das Lesegerät und die Kamera Bestandteile einer Vorrichtung zur Authentifizierung einer Person anhand von Gesichtsbildern und/oder zur Manipulationsdetektion bei Gesichtsbildern, wobei die Vorrichtung vorzugsweise als Durchgangssystem ausgebildet ist, wobei das Durchgangssystem bevorzugt wenigstens eine Tür aufweist. Es ist sehr bevorzugt, dass die Tür geöffnet wird, sofern der Vergleichsalgorithmus einen Wert des Ähnlichkeitsmaßes in den Bereich "Personenidentität/keine Manipulation" einsortiert hat. Es ist möglich, dass ein Alarm, insbesondere ein stiller Alarm, ausgelöst wird, wenn der Vergleichsalgorithmus den Wert des Ähnlichkeitsmaßes in den Bereich "keine Personenidentität/Manipulation" einsortiert. Es liegt im Rahmen der Erfindung, dass im Falle der Einsortierung des Wertes des Ähnlichkeitsmaßes in den Zwischenbereich die beiden Gesichtsbilder einer kontrollierenden Person, beispielsweise einer kontrollierenden Person in einer Leitstelle, angezeigt werden.

Die wenigstens eine Tür des Durchgangssystems ist vorzugsweise als Schwenktür ausgebildet. Bevorzugt umfasst das Durchgangssystem eine Eingangstür und eine Ausgangstür. Mit Vorteil weist das Durchgangssystem zwei Seitenbegrenzungen auf, welche gemeinsam mit der wenigstens einen Tür bzw. der Ausgangstür bzw. der Eingangs- und/oder der Ausgangstür einen kontrollierten Durchgangsbereich bilden. Es ist bevorzugt, dass die Eingangstür sich öffnet, sobald das Ausweisgesichtsbild und die weiteren Ausweisdaten vom Ausweis ausgelesen wurden. Bevorzugt schließt sich die Eingangstür, sobald die zu identifizierende Person die Eingangstür passiert hat, so dass sich vorteilhafterweise nur eine zu identifizierende Person in den Durchgangsbereich aufhält. Gemäß einer sehr bevorzugten Ausführungsform ist die Kamera an der Ausgangstür und insbesondere an einem schwenkbaren Türflügel der Ausgangstür angeordnet.

Es ist sehr bevorzugt, dass das Rechnersystem bzw. der Vergleichsalgorithmus ausgebildet ist/sind bzw. dazu verwendet wird/werden, eine Manipulationsdetektion und insbesondere eine *Morphing Attack Detection* durchzuführen. Die Manipulationsdetektion kann so ausgebildet sein, dass betrügerische und nicht-betrügerische Manipulationen detektiert werden. Mit Vorteil kann die Manipulationsdetektion verschiedene, betrügerische Manipulationen erfassen, worunter neben Morphingattacken z. B. noch *Adversarial Attacks* fallen können.

Es ist möglich, dass das Rechnersystem einen Gesichtsalterungssimulator umfasst bzw. mit einem Gesichtsalterungssimulator verbunden ist. Mit Vorteil stellt das Rechnersystem bzw. der Schätzalgorithmus bzw. der Vergleichs-algorithmus dem Gesichtsalterungssimulator das Ausweisgesichtsbild und den Schätzwert des Alters des Ausweisgesichtsbildes zur Verfügung, woraufhin der Gesichtsalterungssimulator eine Gesichtsalterungssimulation des Ausweisgesichtsbildes durchführt. Es ist sehr bevorzugt, dass der Gesichtsalterungssimulator das simulierte und gealterte Ausweisgesichtsbild dem Vergleichsalgorithmus zur Verfügung stellt, woraufhin der Vergleichs-algorithmus zweckmäßigerweise das simulierte, gealterte Ausweisgesichtsbild mit dem Vergleichsgesichtsbild abgleicht. Hierdurch kann insbesondere der Zwischenbereich des Ähnlichkeitsmaßes verkleinert werden, so dass weniger indifferente Ergebnisse vorliegen.

Die eingangs genannte Aufgabe wird gelöst durch eine Vorrichtung zur Authentifizierung einer Person anhand von Gesichtsbildern und/oder zur Manipulationsdetektion bei Gesichtsbildern, insbesondere zur Durchführung eines erfindungsgemäßen Verfahrens, wobei die Vorrichtung ausgebildet ist, ein Ausweisgesichtsbild eines Ausweises einer zu identifizierenden Person heranzuziehen, wobei die Vorrichtung ein Rechnersystem umfasst, wobei das Rechnersystem ausgebildet ist, eine Beurteilung vorzunehmen, ob bzw. inwieweit das Ausweisgesichtsbild und ein Vergleichsgesichtsbild übereinstimmen, wobei das Rechnersystem einen Vergleichsalgorithmus aufweist, wobei der Vergleichsalgorithmus ausgebildet ist, einen Abgleich des Ausweisgesichtsbildes und des Vergleichsgesichtsbildes durchzuführen, wobei der Abgleich die Grundlage der Beurteilung darstellt, wobei die Beurteilung in einem Ähnlichkeitsmaß abgebildet wird, wobei die Vorrichtung ausgebildet ist, neben dem Ausweisgesichtsbild weitere Ausweisdaten des Ausweises heranzuziehen, wobei das Rechnersystem ausgebildet ist, die weiteren Ausweisdaten so zu nutzen, dass diese einen Wert des Ähnlichkeitsmaßes beeinflussen können, wobei die Vorrichtung ausgebildet ist, dass das Lesegerät die weiteren Ausweisdaten elektronisch ausliest, insbesondere mithilfe von Funk ausliest, wobei die weiteren Ausweisdaten ein Datum umfassen und aus einem integrierten Schaltkreis des Ausweises ausgelesen werden.

Es ist bevorzugt, dass die Vorrichtung ein Lesegerät umfasst, wobei das Lesegerät ausgebildet ist, das Ausweisgesichtsbild des Ausweises der zu identifizierenden Person maschinell auszulesen. Gemäß einer Ausführungsform kann die Vorrichtung das Ausweisgesichtsbild heranziehen, indem es aus einer Dateimenge geladen wird.

Die eingangs genannte Aufgabe wird gelöst durch eine Verwendung des erfindungsgemäßen Verfahrens bzw. der erfindungsgemäßen Vorrichtung in einer öffentlichen und insbesondere staatlichen Einrichtung, insbesondere Verwendung des Verfahrensschritts der Erfassung eines Vergleichsgesichtsbildes, vorzugsweise in einer Einrichtung des internationalen Verkehrs, beispielsweise in einem Flughafen, einer Botschaft, einem Konsulat und/oder einem Seehafen, weiter vorzugsweise in einem Sicherungsbereich eines Flughafens zwischen einer Landseite und einer Luftseite des Flughafens.

Die eingangs genannte Aufgabe wird gelöst durch eine Verwendung des erfindungsgemäßen Verfahrens bzw. der erfindungsgemäßen Vorrichtung in einem privaten Bereich oder öffentlichen, beispielsweise staatlichen Bereich, insbesondere Verwendung des Verfahrensschritts der Erfassung eines Vergleichsgesichtsbildes, vorzugsweise zur Überprüfung von Personen am Außenbereich bzw. der Außengrenze von Bereichen mit Zugangsbeschränkungen.

Durch die Erfassung der Daten wird eine Altersschätzung ermöglicht, welche wiederum bei einer Zugangsbeschränkung ausgeprägt als Alter der Person erforderlich ist. Hierbei kann der altersabhängige Zugang beschränkt werden, beispielsweise bei öffentlichen und/oder privatwirtschaftlichen Veranstaltungen, wie ein Kinobesuch, Casinobesuch, Theaterbesuch, Konzertbesuch oder dergleichen.

Nachfolgend werden zwei Ausführungsbeispiele der Erfindung anhand von drei Figuren erläutert. Es zeigen in schematischer Darstellung
- Figur 1: eine perspektivische Ansicht eines ersten Ausführungsbeispiels der erfindungsgemäßen Vorrichtung,
- Figur 2: eine perspektivische Ansicht eines zweiten Ausführungsbeispiels der erfindungsgemäßen Vorrichtung und
- Figur 3: ein Blockdiagramm des erfindungsgemäßen Verfahrens.

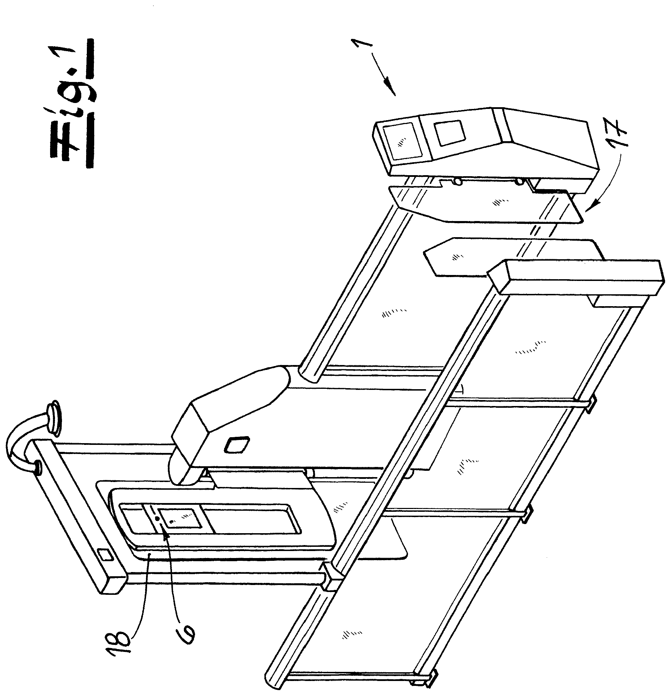

Das erste Ausführungsbeispiel aus Figur 1 kann in einem Sicherheitsbereich eines Flughafens angeordnet sein und ermöglicht dort die vorzugsweise vollautomatische Ausweiskontrolle. Hierzu umfasst die Vorrichtung vorzugsweise ein Lesegerät 1 zum Auslesen von Ausweisen 3 und vorzugsweise eine Kamera 6 zum Erfassen von Vergleichsgesichtsbildern 5 von zu identifizierenden Personen 4. Bevorzugt weist die Vorrichtung eine Eingangstür 17 auf, die sich vorzugsweise öffnet, sobald der Ausweis 3 von einer zu identifizierenden Person 4 ausgelesen wurde. Der Ausweis 3 umfasst u. a. ein Ausweisgesichtsbild 2, welches bevorzugt von dem Lesegerät 1 vorzugsweise mithilfe von Funk, insbesondere durch RFID-Technologie, aus dem Ausweis 3 ausgelesen wird.

Die zu identifizierende Person 4 mag dann ein Inneres der Vorrichtung betreten, woraufhin sich mit Vorteil die Eingangstür 17 wieder schließt. Die Vorrichtung dieses Ausführungsbeispiels umfasst eine Ausgangstür 18, welche vorzugsweise als Schwenktür ausgebildet ist und die Kamera 6 trägt. Die Kamera 6 ist mit Vorteil automatisch höhenverstellbar und passt sich der Größe der zu identifizierenden Person 4 an. Zweckmäßigerweise ist die Vorrichtung so ausgebildet, dass die Kamera 6 ein Vergleichsgesichtsbild 5 der zu identifizierenden Person 4 aufnimmt. Sofern die Vorrichtung eine hinreichende Übereinstimmung zwischen dem Vergleichsgesichtsbild 5 und dem Ausweisgesichtsbild 2 feststellt, öffnet sich in diesem Ausführungsbeispiel die Ausgangstür 18, wodurch die Ausweiskontrolle abgeschlossen ist und die zu identifizierenden Person 4 die Vorrichtung hinter sich lassen kann. Zweckmäßigerweise schließt sich dann die Ausgangstür 18, wodurch die Vorrichtung bereit für die nächste Ausweiskontrolle ist.

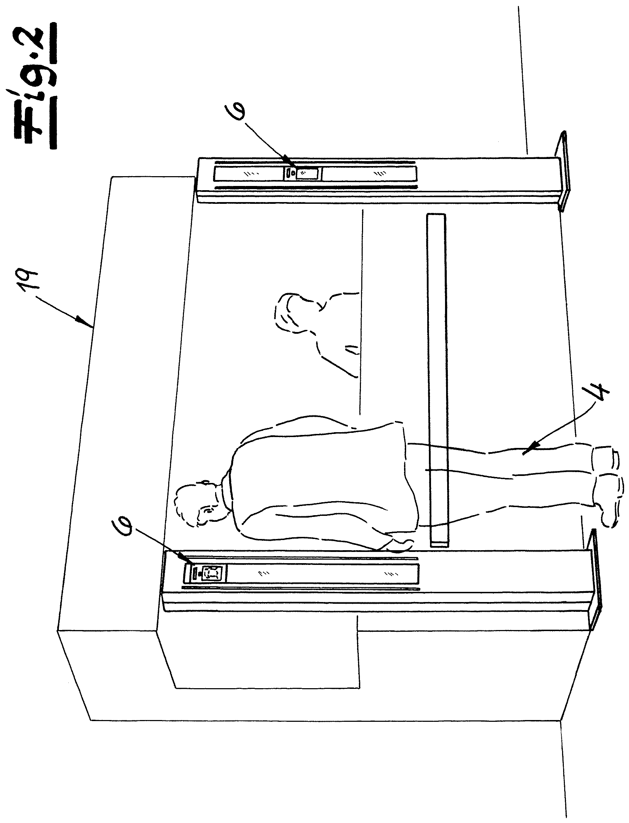

Das zweite, erfindungsgemäße Ausführungsbeispiel aus Figur 2 betrifft nicht die vollautomatische, sondern die teilautomatische Kontrolle an einem Identifikationsschalter 19 in Form eines Grenzkontrollschalters. Die zu identifizierende Person 4 dieses Ausführungsbeispiels tritt an den Identifikationsschalter 19 heran und übergibt der kontrollierenden Person in dem Identifikationsschalter 19 das Identifikationsdokument. Die kontrollierende Person lässt vorzugsweise das Identifikationsdokument von einem in Figur 2 nicht dargestellten Lesegerät 1 auslesen, wodurch das Ausweisgesichtsbild 2 sowie die weiteren Ausweisdaten 9 erfasst werden. Währenddessen mag die zu identifizierende Person 4 bevorzugt an eine Kamera 6 herantreten, welche ein aktuelles Vergleichsgesichtsbild 5 der zu identifizierenden Person 4 aufnimmt. Ein nicht in Figur 2 dargestelltes Rechnersystem 7 bzw. dessen Vergleichsalgorithmus 8 vergleicht die beiden Gesichtsbilder 2, 5 miteinander. Gleichzeitig kann die kontrollierende Person das Ausweisgesichtsbild 2 manuell mit dem aktuellen Vergleichsbild 5 oder auch mit der vor ihr stehenden, zu identifizierenden Person 4 vergleichen, um das Resultat der Beurteilung durch das Rechnersystem 7 zu bestätigen bzw. zu bewerten. Demzufolge erlaubt die teilautomatische Kontrolle insbesondere die menschliche Rückmeldung, mit welcher der Vergleichsalgorithmus 8 trainiert werden kann. Darüber hinaus liegt ein Vorteil der teilautomatischen Kontrolle darin, dass sich menschliche und artifizielle Gesichtserkennung gegenseitig ergänzen können.

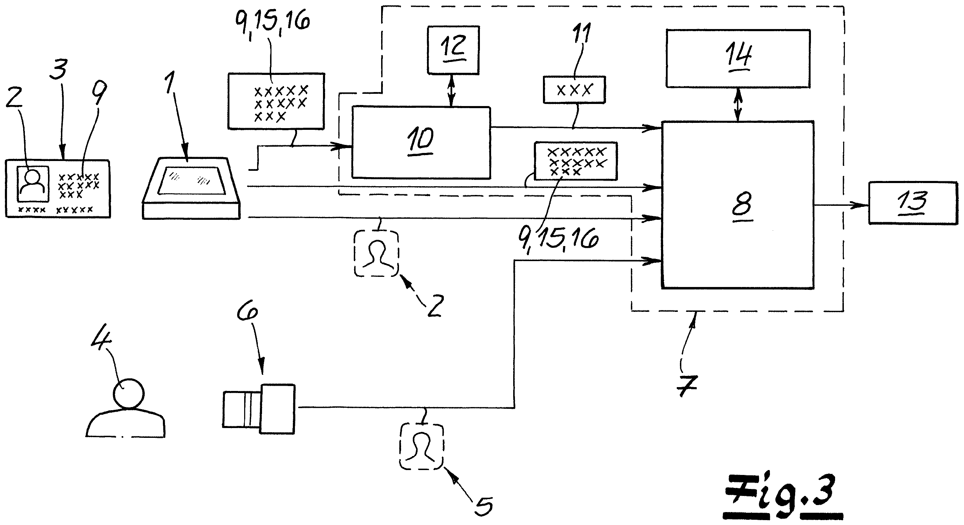

In Figur 3 ist das Verfahren des Ausführungsbeispiels dieser Erfindung in einem Blockdiagramm schematisch abgebildet. Der Ausweis 3 der zu identifizierenden Person 4 umfasst neben dem Ausweisgesichtsbild 2 noch weitere Ausweisdaten 9. Die weiteren Ausweisdaten 9 umfassen insbesondere ausweisbezogene Ausweisdaten 15 sowie personenbezogene Ausweisdaten 16. Die Gruppe der personenbezogenen Ausweisdaten 16 weist insbesondere das Geburtsdatum, den Namen und/oder das Geschlecht der zu identifizierenden Person 4 auf. Die ausweisbezogenen Ausweisdaten 15 mögen wenigstens ein Ausweisdatum, die Art des Ausweises und/oder das ausstellende Land des Ausweises umfassen. Das wenigstens eine Ausweisdatum kann ein Ausstellungsdatum und/oder ein Ablaufdatum des Ausweises sein.

Das mit der Kamera 6 aufgenommene Vergleichsbild 5 wird zweckmäßigerweise einem Rechnersystem 7 der Vorrichtung übergeben. Das Rechnersystem 7 mag aus einem oder mehreren Rechnern bzw. Recheneinheiten bestehen. Das Rechnersystem 7 umfasst einen Vergleichsalgorithmus 8 und vorzugsweise einen Schätzalgorithmus 10. In diesem Ausführungsbeispiel umfasst das Rechnersystem 7 ein Länderregister 12, welches länderspezifische Daten umfasst. Mit Vorteil weist das Rechnersystem 7 einen Gesichtsalterungssimulator 14 auf. Die einzelnen Elemente 8, 10, 12, 14 das Rechnersystems 7 können einzelnen Rechnern bzw. Recheneinheiten zugeordnet sein oder aber sich auf zwei oder mehr Rechner bzw. Recheneinheiten erstrecken. So kann beispielsweise der Vergleichsalgorithmus 8 in zwei oder mehr Teile aufteilbar sein, welche sich auf zwei oder mehr Rechner befinden. Auf einem Rechner können mehrere oder alle Elemente 8, 10, 12, 14 befindlich sein Es ist möglich, dass das Rechnersystem 7 lediglich aus einem Rechner besteht. Insbesondere ist von Vorteil, dass das Rechnersystem 7 teilweise oder gänzlich einem zentralen Server zugeordnet ist, welcher seine Rechenleistung einer Vielzahl von Vorrichtungen, beispielsweise Vorrichtungen nach Figur 1, zur Verfügung stellt.

Der Vergleichsalgorithmus 8 bzw. das Rechnersystem 7 gibt nach dem Abgleich des Ausweisgesichtsbildes 2 mit dem Vergleichsgesichtsbild 5 ein Ähnlichkeitsmaß 13 aus. Das Ähnlichkeitsmaß gibt vorzugsweise an, ob bzw. inwieweit die jeweils in dem Ausweisgesichtsbild 2 und dem Vergleichsgesichtsbild 5 dargestellte Person identisch sind bzw. ob/inwieweit eine Bildmanipulation vorliegt. Das Ähnlichkeitsmaß kann mehrdimensional sein und mehrere Parameter umfassen. Die mehreren Parameter können sich beispielsweise auf die verschiedenen Gesichtspartien beziehen. Beispielsweise mag ein erster Parameter die Ähnlichkeit zwischen den Augenpartien abbilden, während ein weiterer Parameter die Mundpartien miteinander vergleicht. Besonders vorzugsweise ist das von dem Rechnersystem 7 bzw. dem Vergleichsalgorithmus 8 ausgegebene Ähnlichkeitsmaß 13 ein eindimensionaler Parameter und damit ein Score. Der Score ist vorzugsweise aus der Mehrzahl Parametern gebildet, wozu die Parameter bevorzugt gewichtet in den Score einfließen. Der Score kann insbesondere eine Ähnlichkeitswahrscheinlichkeit von 0 bis 1 abbilden, so dass im Falle eines Scores von 1 praktisch zwei identische Gesichtsbilder vorliegen. Bei einem Score von 0 hingegen wäre auf den ersten Blick erkennbar, dass die in den beiden Gesichtsbildern 2, 5 gezeigten Personen unterschiedliche Personen sind. Der Score kann auch die Manipulationswahrscheinlichkeit dergestalt ausdrücken, dass z. B. bei einem Wert von 0 (oder 1) mit Sicherheit keine Manipulation vorliegt, während bei 1 (oder 0) mit Sicherheit eine Manipulation gegeben ist. Der Score kann außerdem beide Parameter (Ähnlichkeitswahrscheinlichkeit und Manipulationswahrscheinlichkeit) in sich vereinen.

Es ist möglich, dass das Ähnlichkeitsmaß bzw. der Score wenigstens einen Schwellwert umfasst, der einen Bereich "Personenidentität/keine Manipulation" und einen Bereich "keine Personenidentität/Manipulation" voneinander trennt. Zweckmäßigerweise umfasst das Ähnlichkeitsmaß wenigstens zwei Schwellwerte, welche neben den Bereichen "Personenidentität/keine Manipulation" und "keine Personenidentität/Manipulation" noch einen Zwischenbereich definieren, welcher zwischen dem Zwischenbereich "Personenidentität/keine Manipulation" und "keine Personenidentität/Manipulation" liegt. Dieser dritte Bereich markiert demzufolge eine Art Graubereich und damit die bewusste Vermeidung einer eindeutigen Aussage des Rechnersystems 7 bzw. des Vergleichsalgorithmus 8.

Den drei Bereichen des Ähnlichkeitsmaßes 13 sind zweckmäßigerweise verschiedene Reaktionen der Vorrichtung dieses Ausführungsbeispiels zugeordnet. Vorteilhafterweise öffnet sich die Ausgangstür 18 immer dann, wenn das Rechnersystem 7 bzw. der Vergleichsalgorithmus 8 das Ähnlichkeitsmaß in den Bereich "Personenidentität/keine Manipulation" einsortiert hat. Bei einer Zuordnung zu dem Zwischenbereich mag es vorteilhaft sein, dass einer kontrollierenden Person, beispielsweise in einer Leitstelle, auf einem Monitor die beiden Gesichtsbilder 2, 5 zum Vergleich angezeigt werden. Die kontrollierende Person kann dann die Ausgangstür 18 manuell öffnen, wenn sie der Meinung ist, dass es sich bei den in den beiden Gesichtsbildern 2, 5 gezeigten Gesichtern um dieselbe Person handelt. Ist hingegen die kontrollierende Person der Auffassung, dass es sich möglicherweise nicht um dieselbe Person handelt, so kann Sie beispielsweise einen Grenzkontrollbeamten zu der in Figur 1 gezeigten Vorrichtung schicken, um den Sachverhalt aufzuklären. Im Falle der Einsortierung in den Bereich "keine Personenidentität/Manipulation" kann es sein, dass die Vorrichtung aus Figur 1 ein, vorzugsweise stilles, Alarmsignal an alle, an der Vorrichtung zugeordneten Grenzkontrollbeamten ausgibt. Gleichzeitig mögen die beiden Gesichtsbilder 2, 5 auch der kontrollierenden Person in der Leitstelle zur Verfügung gestellt werden.

Das erfindungsgemäße Verfahren ist dadurch gekennzeichnet, dass aus dem Ausweis 3 nicht nur das Ausweisgesichtsbild 2 herangezogen wird, sondern darüber hinaus auch noch die weiteren Ausweisdaten 9. Besonders vorzugsweise umfassen die ausgelesenen weiteren Ausweisdaten 9 bzw. die ausweisbezogenen Ausweisdaten 15 ein Ausweisdatum. Besonders vorzugsweise ist das Ausweisdatum ein Ausstellungsdatum oder ein Ablaufdatum. Wenn die Vorrichtung und insbesondere das Lesegerät 1 oder einen weiteres Lesegerät das Ausstellungsdatum direkt aus dem Ausweis 3 auslesen kann, so wird das Ausstellungsdatum als Bestandteil der ausweisbezogenen Ausweisdaten 15 dem Schätzalgorithmus 10 zur Verfügung gestellt. Der Schätzalgorithmus 10 ist vorzugsweise ausgebildet, das Alter des Ausweisgesichtsbildes 2 abzuschätzen und einen Schätzwert 11 des Alters des Ausweisgesichtsbildes 2 dem Vergleichsalgorithmus 8 zur Verfügung zu stellen. Sollte beispielsweise den ausweisbezogenen Ausweisdaten 15 zwar das Ausstellungsdatum zu entnehmen sein, so kann der Schätzalgorithmus 10 das Alter des Ausweisgesichtsbildes 2 näherungsweise auf das Ausstellungsdatum festsetzen.

Der Schätzwert 11 des Alters des Ausweisgesichtsbildes 2 wird zweckmäßigerweise neben den beiden Gesichtsbildern 2, 5 dem Vergleichsalgorithmus 8 zur Verfügung gestellt, wodurch der Vergleichsalgorithmus 8 präzisere Aussagen treffen kann. Handelt es sich beispielsweise um ein recht hohes Alter des Ausweisgesichtsbildes 2 und liegen aufgrund dieses hohen Alters viele Unterschiede zwischen den beiden Gesichtsbildern 2,5 vor, so würde der Vergleichsalgorithmus 8 ohne den Schätzwert 11 unter Umständen zu der Aussage kommen, dass es sich bei den beiden Gesichtern der Gesichtsbilder 2, 5 um unterschiedliche Personen handelt. Wenn aber der Schätzwert 11 ein hohes Alter des Ausweisgesichtsbildes 2 meldet, so hat dies vorzugsweise einen Einfluss auf die Beurteilungskriterien des Vergleichsalgorithmus 8. Beispielsweise kann sich der Bereich "keine Personenidentität/Manipulation" des Ähnlichkeitsmaßes 13 verkleinern, während sich der Zwischenbereich entsprechend vergrößert, wodurch die Beurteilung des Vergleichsalgorithmus 8 insgesamt toleranter wird.

Es ist möglich, dass das Rechnersystem 7 vorzugsweise im Falle eines hohen Alters des Ausweisgesichtsbildes 2, beispielsweise bei mehr als fünf der zehn Jahren, den Schätzwert 11 sowie das Ausweisgesichtsbild 2 einem Gesichtsalterungssimulator 14 übergibt. Der Gesichtsalterungssimulator 14 führt daraufhin zweckmäßigerweise die Simulation der Gesichtsalterung durch und stellt dem Vergleichsalgorithmus 8 ein simuliertes, gealtertes Ausweisgesichtsbild zur Verfügung. Mit Vorteil führt der Vergleichsalgorithmus 8 den Abgleich des Vergleichsgesichtsbildes 5 mit dem simulierten, gealterten Ausweisgesichtsbild durch. Dies ermöglicht es, den Zwischenbereich zu verkleinern, wodurch die Abgleiche des Vergleichsalgorithmus 8 trennschärfer werden und häufiger den Bereichen "Personenidentität/keine Manipulation" oder "keine Personenidentität/Manipulation" zugeordnet werden.

Oft kann das Ausstellungsdatum nicht aus dem Ausweis 3 herangezogen bzw. ausgelesen werden. Stattdessen mögen andere der weiteren Ausweisdaten 9, beispielsweise ein Ablaufdatum, ein Geburtsdatum und/oder das ausstellende Land, heranziehbar bzw. auslesbar sein. Mit diesen weiteren Ausweisdaten 9 kann der Schätzalgorithmus das Alter des Ausweisgesichtsbildes 2 abschätzen. So existieren länderspezifische Altersschwellwerte, ab denen sich die allgemeine Gültigkeitsdauer des Ausweises 3 ändert. Beispielsweise ist nach den aktuellen deutschen Regelungen der deutsche Ausweis bei Personen unter 24 Jahren 6 Jahre lang gültig und muss dann aktualisiert werden. Bei Personen über 24 Jahren wird die Aktualisierung nach den derzeitigen Regelungen alle 10 Jahre fällig. Der deutsche Altersschwellwert liegt folglich bei 24 Jahren, während die zugeordneten Gültigkeitsdauern 6 bzw. 10 Jahre betragen. Würde ein deutscher Staatsangehöriger mit 16 Jahren einen Ausweis beantragen, so müsste diese Person im Alter von 22, 28, 38, 48 usw. Jahren Ausweisaktualisierungen beantragen.

Wird beispielsweise der deutsche Personalausweis optisch ausgelesen, so steht dem Schätzalgorithmus 10 damit nicht das Ausstellungsdatum zur Verfügung, welches sich auf der Rückseite des Ausweises befindet. Dafür allerdings kann das Lesegerät 1 dem Ausweis 3 neben dem Ausweisgesichtsbild 2 häufig auch noch das Geburtsdatum, das Ablaufdatum sowie das ausstellende Land entnehmen. Ist die zu identifizierende Person 4 beispielsweise 37 Jahre alt und das Ablaufdatum ist für das nächste Jahr festgelegt, so kann der Schätzalgorithmus 10 unter Zuhilfenahme des länderspezifischen, im Länderregister 12 enthaltenen Altersschwellwertes nebst dessen zugeordneten Gültigkeitsdauern die Schätzung vornehmen, dass das Ausweisgesichtsbild 2 die zu identifizierende Person im Alter von 28 Jahren zeigt. Folglich beträgt der beispielhafte Schätzwert 11 neun Jahre.

Vorzugsweise wird dem Vergleichsalgorithmus 8 nicht nur das Ausweisgesichtsbild 2 und der vorteilhafte Schätzwert 11 des Alters des Ausweisgesichtsbildes 2 übergeben, sondern darüber hinaus noch weitere Ausweisdaten 9. Denn die weiteren Ausweisdaten 9 dienen vorzugsweise nicht nur der Schätzung des Alters des Ausweisgesichtsbildes 2, sondern auch einem präziseren Abgleich zwischen den beiden Gesichtsbildern 2, 5.

Bevorzugt umfassen die an den Vergleichsalgorithmus 8 übergebenen weiteren Ausweisdaten 9 personenbezogene Ausweisdaten 16. Die an den Vergleichsalgorithmus 8 übergebenen personenbezogenen Ausweisdaten 16 weisen mit Vorteil das Geschlecht und/oder das Geburtsdatum und/oder den Namen der zu identifizierenden Person 4 auf. Mit Erhalt des Geburtsdatums kann der Vergleichsalgorithmus das Geburtsdatum der zu identifizierenden Person 4 heranziehen und hierdurch die altersabhängige Alterungsgeschwindigkeit berücksichtigen. Beispielsweise kann der Vergleichs-algorithmus 8 den Zwischenbereich bei sehr jungen Personen größer gestalten, weil sehr junge Personen einer recht hohen Alterungsgeschwindigkeit bzw. Veränderungsgeschwindigkeit unterworfen sind. Bei Übermittlung des Geschlechts an den Vergleichsalgorithmus 8 kann der Vergleichsalgorithmus 8 die Änderungen bei Gesichtspartien in Abhängigkeit des Geschlechts stärker berücksichtigen. Beispielsweise mögen die Haupthaare von Frauen stärkeren Änderungswahrscheinlichkeiten als die Haupthaare von Männern zugeordnet sein. Umgekehrt ist der Vergleichsalgorithmus 8 insbesondere im Bereich der Wangen bei Männern aufgrund des Bartwuchses toleranter. Auch kann der Vorname der zu identifizierenden Person 4 einen Rückschluss auf deren Geschlecht erlauben.

Der Vergleichsalgorithmus 8 mag einen maschinellen Lernalgorithmus umfassen bzw. mit einem maschinellen Lernalgorithmus verbunden sein. Der maschinelle Lernalgorithmus kann ein neuronales Netz, insbesondere ein konvolutionales neuronales Netz, sein. Vorzugsweise wird der maschinelle Lernalgorithmus darauf trainiert, als Eingabe die beiden Gesichtsbilder 2, 5 zu erhalten um daraus das Ähnlichkeitsmaß 13 und insbesondere einen Score zu ermitteln. Es ist möglich, dass ein weiterer Algorithmus aus dem Ähnlichkeitsmaß bzw. Score ein angepasstes Ähnlichkeitsmaß 13 bzw. einen angepassten Score zu ermitteln, indem der weitere Algorithmus die weiteren Ausweisdaten 9 berücksichtigt. Mit Vorteil ist das Änderungsmaß 13 ein Merkmalsvektor, insbesondere ein nummerischer Vektor oder ein Bitstring, der von den biometrischen und forensischen Merkmalen der Gesichtsbilder abhängt. Vorzugsweise umfasst der Vergleichsalgorithmus 8 einen zweiten maschinellen Lernalgorithmus, der aus den Merkmalsvektoren der beiden Gesichtsbilder 2, 5 und optional den weiteren Ausweisdaten 9 das Änderungsmaß 13 bzw. den Score berechnet. Der Score mag von einem weiteren Algorithmus herangezogen werden, woraus ein angepasster Score errechnet wird.

Dass erfindungsgemäß ermittelte Ähnlichkeitsmaß 13 ist aufgrund der weiteren Ausweisdaten 9 deutlich treffsicherer im Vergleich zu herkömmlichen Gesichtserkennungen. Hierdurch können insbesondere auch *Facial Morphing Attacks* besser aufgedeckt werden, so dass die eingangs genannte Aufgabe gelöst wird.

**Bezugszeichenliste**

| | |
|---|---|
| Lesegerät | 1 |
| Ausweisgesichtsbild | 2 |
| Ausweise | 3 |
| zu identifizierenden Person | 4 |
| Vergleichsgesichtsbild | 5 |
| Kamera | 6 |
| Rechnersystem | 7 |
| Vergleichsalgorithmus | 8 |
| Ausweisdaten | 9 |
| Schätzalgorithmus | 10 |
| Schätzwert | 11 |
| Länderregister | 12 |
| Ähnlichkeitsmaß | 13 |
| Gesichtsalterungssimulator | 14 |
| ausweisbezogene Ausweisdaten | 15 |
| personenbezogene Ausweisdaten | 16 |
| Eingangstür | 17 |
| Ausgangstür | 18 |
| Identifikationsschalter | 19 |

## Patentansprüche

1. Verfahren zur Authentifizierung einer Person anhand von Gesichtsbildern und/oder zur Manipulationsdetektion bei Gesichtsbildern, wobei ein Ausweisgesichtsbild (2) eines Ausweises (3) einer zu identifizierenden Person (4) herangezogen wird, wobei ein Vergleichsgesichtsbild (5) der Person (4) herangezogen wird, wobei ein Rechnersystem (7) eine Beurteilung vornimmt, ob bzw. inwieweit das Ausweisgesichtsbild (2) und das Vergleichsgesichtsbild (5) übereinstimmen, wobei das Rechnersystem (7) einen Vergleichsalgorithmus (8) umfasst, wobei der Vergleichsalgorithmus (8) einen Abgleich des Ausweisgesichtsbildes (2) und des Vergleichsgesichtsbildes (5) durchführt und der Abgleich die Grundlage der Beurteilung darstellt, wobei die Beurteilung in einem Ähnlichkeitsmaß (13) abgebildet wird, wobei neben dem Ausweisgesichtsbild (2) weitere Ausweisdaten (9) des Ausweises (3) herangezogen werden, wobei die weiteren Ausweisdaten (9) vom Rechnersystem (7) genutzt werden und einen Wert des Ähnlichkeitsmaßes (13) beeinflussen können,
**dadurch gekennzeichnet, dass**
die weiteren Ausweisdaten (9) von einem Lesegerät (1) ausgelesen werden, wobei das Lesegerät (1) die weiteren Ausweisdaten (9) elektronisch ausliest, insbesondere mithilfe von Funk, wobei die weiteren Ausweisdaten (9) ein Datum umfassen und aus einem integrierten Schaltkreis des Ausweises (3) ausgelesen werden.

2. Verfahren nach Anspruch 1, wobei die Ausweisdaten (9) ein Signaturdatum, ein Erzeugungsdatum biometrischer Daten, ein Ausstellungsdatum, ein Personalisierungsdatum und/oder ein Aufnahmedatum von Notfalldaten aufweisen.

3. Verfahren nach Anspruch 1 oder 2, wobei das Ausweisgesichtsbild (2) von einem Lesegerät (1) aus dem Ausweis (3) maschinell ausgelesen und/oder aus einer Dateimenge geladen wird.

4. Verfahren nach einem der Ansprüche 1 bis 3, wobei das Vergleichsgesichtsbild (5) mit einer Kamera (6) erfasst wird, wobei die Kamera (6) vorzugsweise mit dem Rechnersystem (7) zur Übermittlung von Bilddaten des Vergleichsgesichtsbildes (5) verbunden ist.

5. Verfahren nach einem der Ansprüche 1 bis 4, wobei das Rechnersystem (7) einen Schätzalgorithmus (10) aufweist, wobei der Schätzalgorithmus (10) aus den weiteren Ausweisdaten (9) einen Schätzwert (11) des Alters des Ausweisgesichtsbildes (2) ermittelt und den Schätzwert (11) dem Vergleichsalgorithmus (8) zur Verfügung stellt.

6. Verfahren nach einem der Ansprüche 1 bis 5, wobei das Lesegerät (1) das Ausweisgesichtsbild (2) elektronisch ausliest, insbesondere mithilfe von Funk und/oder optisch und/oder per elektronischem Kontakt ausliest.

7. Verfahren nach einem der Ansprüche 1 bis 6, wobei das Rechnersystem (7) ein Länderregister (12) umfasst bzw. mit einem Länderregister (12) verbunden ist, wobei das Länderregister (12) länderspezifische Daten umfasst, wobei vorzugsweise der Schätzalgorithmus (10) auf das Länderregister (12) zugreift, wobei die länderspezifischen Daten vorzugsweise wenigstens eine länderspezifische allgemeine Gültigkeitsdauer von Ausweisen (3) und/oder wenigstens einen länderspezifischen Altersschwellwert, der eine länderspezifische allgemeine Gültigkeitsdauer definiert, umfassen.

8. Verfahren nach einem der Ansprüche 1 bis 7, wobei das Rechnersystem (7) bzw. der Vergleichsalgorithmus (8) einen maschinellen Lernalgorithmus, vorzugsweise ein neuronales Netz und besonders vorzugsweise ein konvolutionales neuronales Netz umfasst.

9. Verfahren nach einem der Ansprüche 1 bis 8, wobei das Lesegerät (1) und die Kamera (6) Bestandteile einer Vorrichtung zur Authentifizierung einer Person anhand von Gesichtsbildern sind, wobei die Vorrichtung vorzugsweise als Durchgangssystem (19) ausgebildet ist, wobei das Durchgangssystem (19) bevorzugt wenigstens eine Tür (17, 18) aufweist.

10. Verfahren nach einem der Ansprüche 1 bis 9, wobei das Rechnersystem (7) bzw. der Vergleichsalgorithmus (8) ausgebildet ist/sind bzw. dazu verwendet wird/werden, eine Manipulationsdetektion und insbesondere eine Morphing Attack Detection durchzuführen.

11. Vorrichtung zur Authentifizierung einer Person anhand von Gesichtsbildern, insbesondere zur Durchführung eines Verfahrens nach einem der Ansprüche 1 bis 10, wobei die Vorrichtung ausgebildet ist, ein Ausweisgesichtsbild (2) eines Ausweises (3) einer zu identifizierenden Person (4) heranzuziehen, wobei die Vorrichtung ein Rechnersystem (7) umfasst, wobei das Rechnersystem (7) ausgebildet ist, eine Beurteilung vorzunehmen, ob bzw. inwieweit das Ausweisgesichtsbild (2) und ein Vergleichsgesichtsbild (5) übereinstimmen, wobei das Rechnersystem (7) einen Vergleichsalgorithmus (8) aufweist, wobei der Vergleichsalgorithmus (8) ausgebildet ist, einen Abgleich des Ausweisgesichtsbildes (2) und des Vergleichsgesichtsbildes (5) durchzuführen, wobei der Abgleich die Grundlage der Beurteilung darstellt, wobei die Beurteilung in einem Ähnlichkeitsmaß (13) abgebildet wird,
wobei die Vorrichtung ausgebildet ist, neben dem Ausweisgesichtsbild (2) weitere Ausweisdaten (9) des Ausweises (3) heranzuziehen, wobei das Rechnersystem (7) ausgebildet ist, die weiteren Ausweisdaten (9) so zu nutzen, dass diese einen Wert des Ähnlichkeitsmaßes (13) beeinflussen können,
**dadurch gekennzeichnet, dass**
die Vorrichtung ein Lesegerät (1) umfasst, wobei das Lesegerät (1) die weiteren Ausweisdaten (9) elektronisch ausliest, insbesondere mithilfe von Funk, wobei die weiteren Ausweisdaten (9) ein Datum umfassen und aus einem integrierten Schaltkreis des Ausweises (3) ausgelesen werden.

12. Vorrichtung nach Anspruch 11, wobei die Vorrichtung ein Lesegerät (1) umfasst, wobei das Lesegerät (1) ausgebildet ist, das Ausweisgesichtsbild (2) und/oder die weiteren Ausweisdaten (9) des Ausweises (3) der zu identifizierenden Person (4) maschinell auszulesen.

13. Verwendung des Verfahrens nach einem der Ansprüche 1 bis 10 bzw. der Vorrichtung nach Anspruch 11 in einer öffentlichen und insbesondere staatlichen Einrichtung, insbesondere Verwendung des Verfahrensschritts der Erfassung eines Vergleichsgesichtsbildes, vorzugsweise in einer Einrichtung des internationalen Verkehrs, beispielsweise in einem Flughafen, einer Botschaft, einem Konsulat und/oder einem Seehafen, weiter vorzugsweise in einem Sicherungsbereich eines Flughafens zwischen einer Landseite und einer Luftseite des Flughafens.

14. Verwendung des Verfahrens nach einem der Ansprüche 1 bis 10 bzw. der Vorrichtung nach Anspruch 11 in einem privaten Bereich oder öffentlichen, beispielsweise staatlichen Bereich, insbesondere Verwendung des Verfahrensschritts der Erfassung eines Vergleichsgesichtsbildes, vorzugsweise zur Überprüfung von Personen am Außenbereich bzw. der Außengrenze von Bereichen mit Zugangsbeschränkungen.
